# EUROPEAN PATENT APPLICATION

(11) **EP 4 017 013 A1**
(43) Date of publication of application: **22.06.2022**
(21) Application number: 20852773.9
(22) Date of filing: 18.06.2020
(51) Int. Cl.: H04N 21/2187

(54) **METHOD AND APPARATUS FOR OPENING VIDEO PICTURE IN CHAT ROOM, AND ELECTRONIC DEVICE AND STORAGE MEDIUM**

(30) Priority: 14.08.2019 CN 201910750369
(71) Applicant: Beijing Dajia Internet Information Technology Co., Ltd., Haidian District Beijing 100085 (CN)
(72) Inventor: TAN, Peiqiang, Beijing 100085 (CN); LI, Chaofan, Beijing 100085 (CN)
(74) Representative: Mathys & Squire
(86) International application number: PCT/CN2020/096904
(87) International publication number: WO 2021/027398

(57) **Abstract**

The application relates to a method and apparatus for opening a video screen in a voice chat room, and an electronic device and a storage medium. The method is applied to a live streamer client and comprises: sending a voice chat room opening request to a server, so as the server creates a voice chat room, and opening the voice chat room after voice chat room data is generated; and pushing, on the basis of the voice chat room data, a video stream and an audio stream to a content distribution server when a parameter value of a video screen state parameter res opening, so that when the parameter value of the video screen state parameter res opening, a viewer client pulls, on the basis of the voice chat room data, the video stream and the audio steam from the content distribution server to output same. Since a voice chat room opening request includes a parameter value of a video screen state parameter, a server can determine, according to the parameter value, whether to open a video screen, and a live streamer client pushes a video stream and an audio stream together when the video screen is opened, so that a streamer can interact with viewers in the chat room by means of a video.

## Description

### Cross Reference to Related Applications

The application claims the priority from Chinese Patent Application No. 201910750369.7, filed with the China National Intellectual Property Administration on August 14, 2019 and entitled "METHOD AND APPARATUS FOR OPENING VIDEO SCREEN IN CHAT ROOM, AND ELECTRONIC DEVICE AND STORAGE MEDIUM" , the entire content of which is hereby incorporated by reference.

### Field

The application relates to the technical field of multimedia, in particular to a method and apparatus for opening a video screen in a voice chat room, an electronic device and a storage medium.

### Background

With rapid development and becoming increasingly mature of an Internet live stream platform, an entertainment form of setting up a voice chat room in a live streaming room to communicate is widely popular.

In general, each chat room has a chat topic and at least includes one live streamer or anchor, and other users may apply to or be invited by the live streamer for becoming guests in the chat room. The liver streamer or anchor is a person who broadcasts himself/herself online through a live stream. In a chatting process, the live streamer and the guests communicate with users in the same chat room in a voice manner, and audiences participate in interaction in a manner of sending text messages.

### Summary

The application provides a method and apparatus for opening a video screen in a voice chat room, an electronic device and a storage medium so as to at least solve the problem that an interaction manner between users in the chat room is simplex in the related art. The technical solution of the application is as follows.

According to a first aspect of an embodiment of the application, a method for opening a video screen in a voice chat room is provided, applied to a live streamer client, includes:
sending a request for opening the voice chat room to a primary sever so that the primary server creates the voice chat room, generates data of the voice chat room, and opens the voice chat room, the request includes a parameter value representing a state of the video screen, and the data of the voice chat room includes the parameter value obtained from the request; and
pushing, based on the data of the voice chat room, a video stream and an audio stream to a content delivery network server in response to the parameter value representing an open state of the video screen, so that an audience client pulls, based on the data of the voice chat room, the video stream and the audio stream from the content delivery network server for outputting in response to the parameter value representing the open state.

According to a second aspect of an embodiment of the application, an apparatus for opening a video screen in a voice chat room is provided, applied to a live streamer client, includes:
a first sending module, configured to execute sending a request for opening the voice chat room to a primary sever so that the primary server creates the voice chat room, generates data of the voice chat room, and opens the voice chat room, the request includes a parameter value representing a state of the video screen, and the data of the voice chat room includes the parameter value obtained from the request; and
a first pushing module, configured to execute pushing, based on the data of the voice chat room, a video stream and an audio stream to a content delivery network server in response to the parameter value representing an open state of the video screen, so that an audience client pulls, based on the data of the voice chat room, the video stream and the audio stream from the content delivery network server for outputting in response to the parameter value representing the open state.

According to a third aspect of an embodiment of the application, an electronic device is provided, includes:
a processor; and
a memory, configured to store an instruction executable by the processor;
the processor is configured to execute:
   sending a request for opening the voice chat room to a primary sever so that the primary server creates the voice chat room, generates data of the voice chat room, and opens the voice chat room, wherein the request comprises a parameter value representing a state of the video screen, and the data of the voice chat room includes the parameter value obtained from the request; and
   pushing, based on the data of the voice chat room, a video stream and an audio stream to a content delivery network server in response to the parameter value representing an open state of the video screen, so that an audience client pulls, based on the data of the voice chat room, the video stream and the audio stream from the content delivery network server for outputting in response to the parameter value representing the open state.

According to a fourth aspect of an embodiment of the application, a storage medium is provided. The storage medium storing a computer program thereon, where the program, when executed by a processor, implements the method of any method for opening a video screen in a voice chat room in the above first aspect.

According to a fifth aspect of an embodiment of the application, a computer program product is provided. When the computer program product is executed by a processor of a server, the server can execute any method for opening a video screen in a voice chat room in the above first aspect.

The technical solution provided by the embodiments of the application at least bring about the following beneficial effects: by sending a request for opening the voice chat room to a primary sever so that the primary server creates the voice chat room, generates data of the voice chat room, and opens the voice chat room, where the request includes a parameter value representing a state of the video screen, and the data of the voice chat room includes the parameter value obtained from the request; and pushing, based on the data of the voice chat room, a video stream and an audio stream to a content delivery network server in response to the parameter value representing an open state of the video screen, so that an audience client pulls, based on the data of the voice chat room, the video stream and the audio stream from the content delivery network server for outputting in response to the parameter value representing the open state. As the request for opening the voice chat room sent by the live streamer client includes the parameter value representing a state of the video screen, the primary server can determine whether the video screen is opened in the voice chat room according to the parameter value after setting up and opening the voice chat room, the live streamer client pushes the video stream and the audio stream together when the video screen is opened so that a streamer in the chat room can not only make a voice chat, but also interact with audiences in a video manner.

It should be understood that the above general description and the following detailed description are only exemplary and explanatory and do not limit the protection scope of the application.

### Brief Description of the Drawings

Accompanying drawings here, which are incorporated in and constitute a part of this specification, illustrate embodiments consistent with embodiments of the application and, together with the description, serve to explain principles of the application and do not constitute an inappropriate limitation on the application.
FIG. 1 is a schematic diagram of a method for opening a video screen in a voice chat room according to an embodiment of the application.
FIG. 2 is a flowchart of a method for opening a video screen in a voice chat room according to an embodiment of the application.
FIG. 3 is another schematic diagram of a method for opening a video screen in a voice chat room according to an embodiment of the application.
FIG. 4 is another flowchart of a method for opening a video screen in a voice chat room according to an embodiment of the application.
FIG. 5 is a signaling diagram of a voice chat room opening process in the embodiment shown in FIG. 4.
FIG. 6 is a signaling diagram of a video screen opening process in the embodiment shown in FIG. 4.
FIG. 7 is a signaling diagram of a voice chat room closing process in the embodiment shown in FIG. 4.
FIG. 8 is a schematic diagram of an apparatus for opening a video screen in a voice chat room according to an embodiment of the application.
FIG. 9 is a schematic diagram of an electronic device provided with a live streamer client according to an embodiment of the application.

### Detailed Description of the Embodiments

In order to make those ordinarily skilled in the art better understand the technical solution of the application, the technical solution in embodiments of the application will be described clearly and completely below with reference to the drawings.

It needs to be noted that terms "first", "second" and the like in the specification, claims and the drawings of the application are used for distinguishing similar objects rather than intend to describe a specific sequence or a precedence order. It should be understood that data used like this may be interchangeable under appropriate circumstances so that the embodiments of the application described herein can be implemented in a sequence besides those sequences illustrated or described herein. Described implementations described in the following exemplary embodiments do not represent all implementations consistent with the application. Rather, they are only examples of an apparatus and a method detailed in the appended claims and consistent with some aspects of the application.

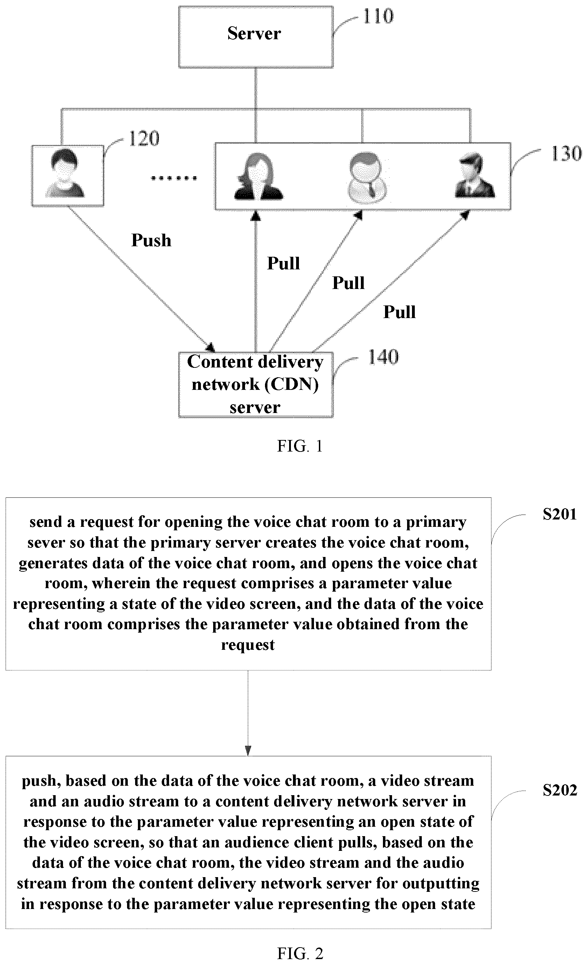

FIG. 1 is a schematic diagram of a method for opening a video screen in a voice chat room according to an embodiment of the application. As shown in the FIG. 1, a live streamer client 120 sends a request for opening the voice chat room to a primary sever 110, and the primary sever 110 creates the voice chat room, generates data of the voice chat room, and opens the voice chat room. When a parameter value of a video screen state parameter contained in the chat room opening request represents opening, it represents that a streamer will open the video screen in an opened chat room, at the moment, the live streamer client 120 pushes a video stream and an audio stream to a content delivery network (CDN) server 140, an audience client 130 pulls the video stream and the audio stream from the CDN server 140 correspondingly and displays them on its own chat room interface.

FIG. 2 is a flowchart of a method for opening a video screen in a voice chat room according to an embodiment of the application. As shown in the FIG. 2, the method is applied to the live streamer client, including the following steps.

In S201, the request for opening the voice chat room is sent to a primary sever so that the primary server creates the voice chat room, generates data of the voice chat room, and opens the voice chat room. The request includes a parameter value representing a state of the video screen, and the data includes the parameter value obtained from the request.

In S202, the video stream and the audio stream are pushed to the content delivery network server in response to the parameter value representing an open state of the video screen, so that an audience client pulls, based on the data, the video stream and the audio stream from the content delivery network server for outputting when the parameter value represents the open state.

In some embodiments, the request for opening the chat room may include: an identity of a live streaming room, a live streamer identity, a topic of the opened chat room, a manner of opening the chat room and the parameter value of the video screen state parameter.

In some embodiments of the application, the streamer may open the chat room in the following three manners.

The first manner: if the streamer is in the middle of live streaming in the live streaming room, the streamer can click a voice chat room opening button on a live streaming room interface so as to directly switch from the live streaming room to the chat room.

The second manner: the streamer can click the chat room opening button on an intra-city interface displayed on his own client so as to enter the chat room from the intra-city interface.

The third manner: the streamer can click the chat room opening button on a voice chat room setting up interface displayed on his own client so as to open the chat room.

In some embodiments, the primary server sets up the voice chat room bound to the live streaming room identity according to the received chat room opening request, and opens the voice chat room after saving the voice chat room data.

In some embodiments, when the primary server opens the voice chat room, the primary server obtains an identity of live streamer client and an identity of audience client from already saved the data of live streaming room according to the identity of live streaming room, then generates a message which indicates that the chat room has been opened, and sends the message to the live streamer client and the audience client. The live streamer client obtains the data of the voice chat room after receiving the message which indicates that the chat room is already opened, pushes, to the CDN server, the video stream and the audio stream of the live streaming room bound to the voice chat room in response to the parameter value of the video screen state parameter representing opening, and pushes, to the CDN server, only the audio stream of the live streaming room bound to the voice chat room in response to the parameter value of the video screen state parameter representing closing, so that the audience client obtains the voice chat room data after receiving the message which means that the chat room is already opened, pulls, from the CDN server, the video stream and the audio stream of the live streaming room bound to the voice chat room for outputting in response to the parameter value of the video screen state parameter representing opening, and pulls, from the CDN server, the audio stream of the live streaming room bound to the voice chat room for outputting in response to the parameter value of the video screen state parameter representing closing.

Obviously, as the chat room opening request sent by the live streamer client includes the parameter value of the video screen state parameter, after the voice chat room is set up and opened, whether the video screen needs to be further opened in the voice chat room may be determined according to whether the parameter value of the parameter represents opening or closing so that the streamer can not only make a voice chat, but also select a video manner to interact with the audiences in the chat room.

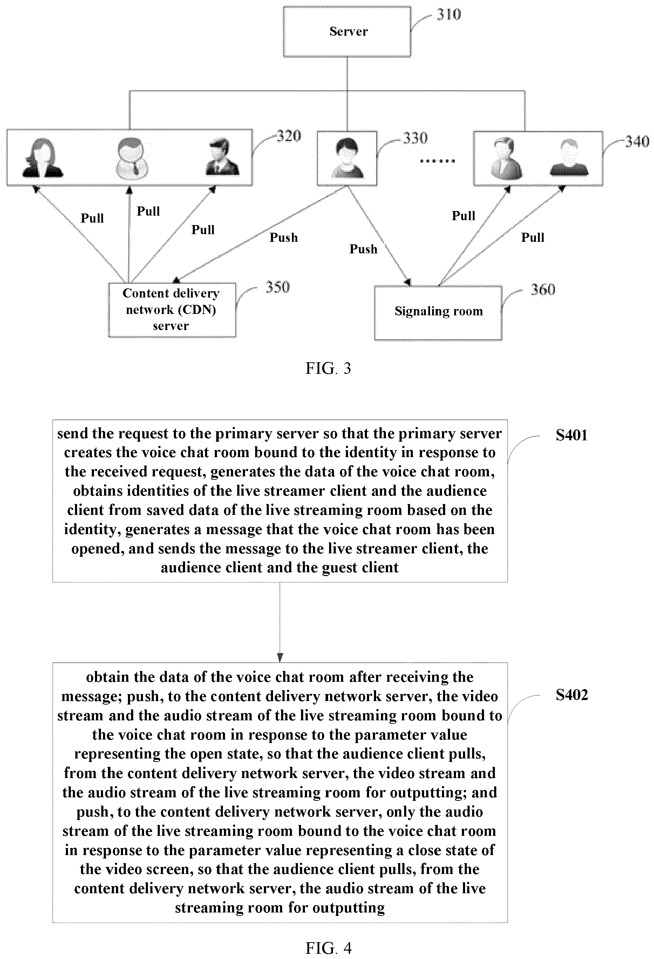

Besides, a guest may be included besides the streamer and the audiences in some live streaming rooms, so another schematic diagram of the method for opening the video screen in the chat room is shown in FIG. 3. The live streamer client 330 sends the chat room opening request to the primary server 310, and then the primary server 310 sets up the voice chat room, and then opens the voice chat room after generating the data of the voice chat room. When the parameter value of the video screen state parameter contained in the chat room opening request represents opening, the live streamer client 310 pushes the video stream and the audio stream respectively to the content delivery network (CDN) server 350 and a signaling room 360, correspondingly, the audience client 320 and a guest client 340 obtain the video stream and the audio stream respectively from the CDN server 350 and the signaling room 360 and display them on their own chat room interfaces.

In some embodiments, as shown in FIG. 4, when there are the streamer, the audiences and the guest in the live streaming room, the method for opening the video screen in the chat room includes the following steps.

In S401, the chat room opening request is sent to the primary server so as to make the primary server set up the voice chat room bound to the live streaming room identity according to the received chat room opening request and then generate the voice chat room data, and then make the primary server obtain an identity of the live streamer client, an identity of the audience client and an identity of the guest client from the already saved the data of the live streaming room according to the identity of the live streaming room to generate the message which means that the chat room is already opened, and send the message to the live streamer client, the audience client and the guest client.

It is the same as S201 in the embodiment shown in FIG. 2, so the chat room opening request includes the parameter value of the video screen state parameter, and the voice chat room data includes the parameter value of the video screen state parameter obtained from the chat room opening request.

In S402, after the message which means that the chat room is already opened is received, the data of the voice chat room are obtained, the video stream and the audio stream of the live streaming room bound to the voice chat room are pushed to the CDN server and the signaling room respectively in response to the parameter value of the video screen state parameter representing opening, and the audio stream of the live streaming room bound to the voice chat room is pushed to the CDN server and the signaling room respectively in response to the parameter value of the video screen state parameter representing closing, so that the audience client obtains the data of the voice chat room after receiving the message which means that the chat room is already opened, pulls, from the CDN server, the video stream and the audio stream of the live streaming room bound to the voice chat room for outputting in response to the parameter value of the video screen state parameter representing opening and pulls, from the CDN server, only the audio stream of the live streaming room bound to the voice chat room for outputting in response to the parameter value of the video screen state parameter representing closing; and the guest client is made to obtain the data of the voice chat room after receiving the message which means that the chat room is already opened, pull, from the signaling room, the video stream and the audio stream of the live streaming room bound to the voice chat room for outputting in response to the parameter value of the video screen state parameter representing opening, and pull, from the signaling room, the audio stream of the live streaming room bound to the voice chat room for outputting in response to the parameter value of the video screen state parameter representing closing.

In some embodiments, in S402, the audience client and the guest client obtain the data of the voice chat room after receiving the message which means that the chat room is already opened and can draw video windows in chat room interfaces of their own clients so as to display the pulled video stream and replace an original background image in response to the parameter value of the video screen state parameter representing opening, and a user can watch a live stream picture of the streamer through the video windows.

Compared with pulling the video stream and the audio stream from the CDN server, stream pulling by the guest client from the signaling room is faster and shorter in delay here so that the guest can participate in live stream interaction more timely.

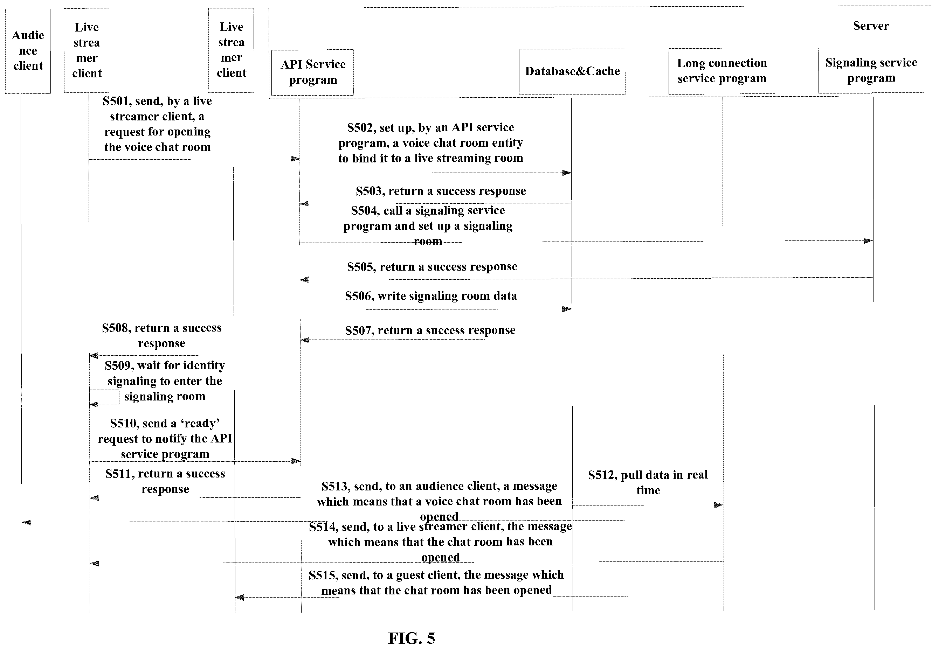

In the embodiment shown in FIG. 4, an API service program, a long connection service program and a signaling service program may be preset in the primary server. The above method for opening the video screen in the chat room will be described in detail below with reference to FIG. 5 to FIG. 7.

FIG. 5 is a signaling diagram of a voice chat room opening process in the embodiment shown in FIG. 4. Referring to FIG. 5, the process may include the following steps.

In S501, the live streamer client sends the chat room opening request to the API service program.

In step S502, the API service program sets up a voice chat room entity, binds it to the live streaming room, generates the data of the voice chat room and saves the data in a database and a cache.

In some embodiments, the live streamer client sends the chat room opening request so as to make the API service program set up the voice chat room entity in the database according to the received chat room opening request, perform synchronization into the cache, and bind an identity of the obtained voice chat room entity to the identity of the live streaming room.

In this step, the voice chat room data are saved in the cache so that the reading and inquiry speed of the data can be increased.

In S503, the database and the cache return a success response to the API service program.

In S504, the API service program calls the signaling service program to set up the signaling room.

In S505, the signaling service program returns the success response to the API service program.

In S506, the API service program writes signaling room data into the database and the cache.

In S507, the database and the cache return the success response to the API service program.

After a signaling server sets up the signaling room successfully, the API service program saves the parameter value of the video screen state parameter, voice chat room entity data, signaling room data and a bound relation between the identity of the voice chat room entity and the identity of the live streaming room as the voice chat room data correspondingly.

In S508, the API service program returns the success response to the live streamer client.

In S509, the live streamer client waits for identity signaling to enter the signaling room.

In S510, the live streamer client sends a 'ready' request to notify the API service program.

In this step, the live streamer client waits for the identity signaling to enter the set-up signaling room and may then send the 'ready' request to notify the API service program, which res that the signaling room is set up successfully.

In S511, the API service program returns the success response to the live streamer client.

In S512, the long connection service program pulls data from the database and the cache in real time.

In some embodiments, the data may be directly obtained from the cache.

In S513, the long connection service program sends, to the audience client, the message which means that the chat room is already opened.

In S514, the long connection service program sends, to the live streamer client, the message which means that the chat room is already opened.

In S515, the long connection service program sends, to the guest client, the message which means that the chat room is already opened.

In some embodiments, the long connection service program pulls the data from the cache in real time, whether the chat room is already opened is judged through a difference of comparing data pulling this time with data pulling last time, and the message which means that the chat room is already opened is sent to the audience client, the live streamer client and the guest client respectively if the chat room is already opened.

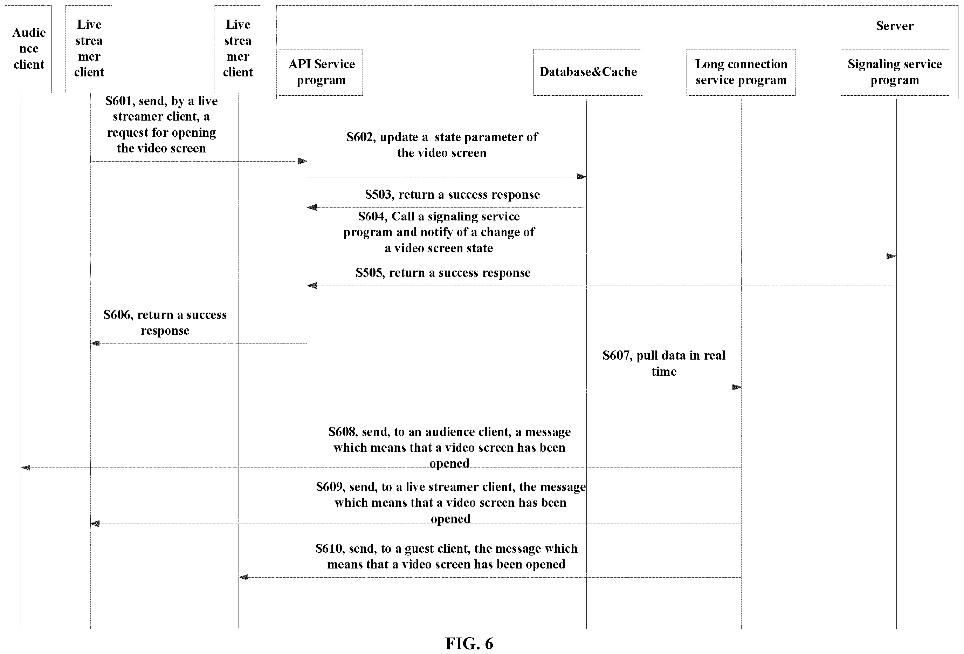

FIG. 6 is a signaling diagram of a video screen opening process in the embodiment shown in FIG. 4. Referring to FIG. 6, the process may include the following steps.

In S601, the live streamer client sends a request for opening the video screen to the API service program.

In S602, the API service program updates the state parameter of the video screen.

In S603, the database and the cache return a success response to the API service program.

In S601 to S603, the live streamer client detects whether the user clicks a button for opening the video screen; and if yes, the request for opening the video screen is sent to the API service program so as to make the API service program update the state parameter of the video screen in the data of the voice chat room saved in the database to be opened and perform synchronization into the cache.

In S604, the API service program calls the signaling service program to notify of change of a video screen state.

In S605, the signaling service program returns the success response to the API service program.

After the API service program receives a parameter updating success message returned by the database, the API service program calls the signaling service program to notify of change of the video screen state, generate a video screen state parameter updating instruction and send the instruction to the live streamer client, the audience client and the guest client. After the live streamer client receives the video screen state parameter updating instruction, the live streamer client obtains the data of the voice chat room and pushes, to the CDN server and the signaling room, the video stream and the audio stream of the live streaming room bound to the voice chat room entity so as to make the audience client obtain the data of the voice chat room after receiving the video screen state parameter updating instruction and pull, from the CDN server, the video stream and the audio stream of the live streaming room bound to the voice chat room entity for outputting and make the guest client obtain the voice chat room data after receiving the video screen state parameter updating instruction and pull, from the signaling room, the video stream and the audio stream of the live streaming room bound to the voice chat room entity for outputting.

In S606, the API service program returns the success response to the live streamer client.

In S607, the long connection service program pulls the data from the database and the cache in real time.

In some embodiments, the data may be obtained directly from the cache.

In S608, a long connection server sends, to the audience client, a message which means that the video screen has been opened.

In S609, the long connection server sends, to the live streamer client, the message which means that the video screen has been opened.

In S610, the long connection server sends, to the guest client, the message which means that the video screen has been opened.

Likewise, the long connection service program pulls the data from the cache in real time, whether the video screen has been opened is judged through the difference of comparing the data pulling this time with the data pulling last time, and if the video screen has been opened, the message which means that the video screen has been opened is sent to the audience client, the live streamer client and the guest client respectively.

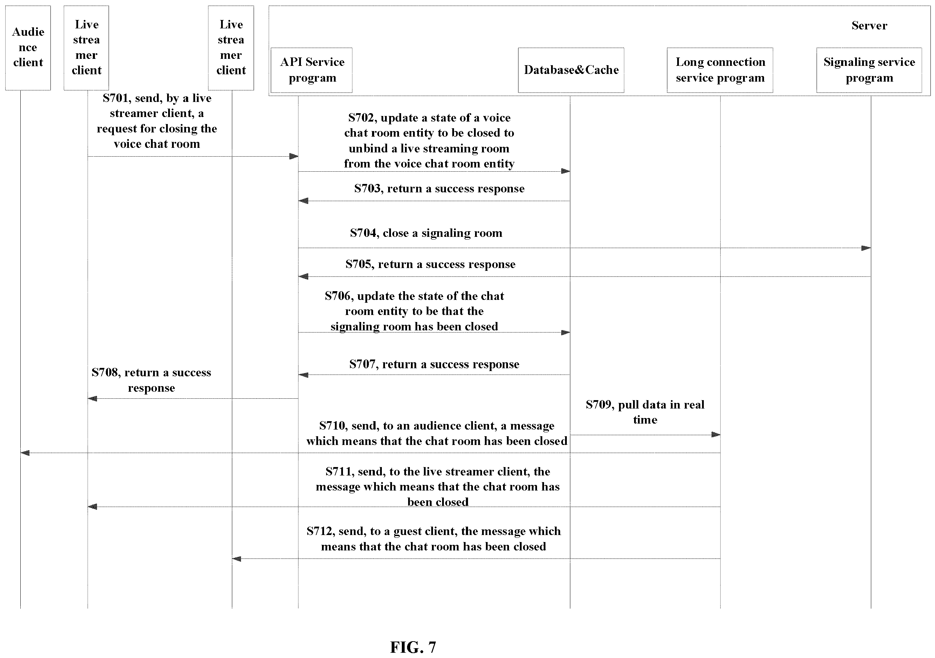

FIG. 7 is a signaling diagram of a voice chat room closing process in the embodiment shown in FIG. 4. Referring to FIG. 7, the process may include the following steps.

In S701, the live streamer client sends a request for closing the voice chat room to the API service program.

In some embodiments, the live streamer client detects whether the user clicks a button for closing the voice chat room, and if yes, the request for closing the voice chat room is sent to the primary server.

In S702, the API service program updates a voice chat room entity state in the database and the cache to be closed so as to unbind the live streaming room from the voice chat room entity.

In S703, the database and the cache return the success response to the API service program.

It may be understood that the process for closing the voice chat room is the same as the process for opening the voice chat room. The API service program detects whether the request for closing the voice chat room sent by the live streamer client is received, and if the API service program receives the request for closing the voice chat room sent by the live streamer client, the state of the voice chat room entity in the database is updated to be closed, the identity of the voice chat room entity is unbound from the identity of the live streaming room.

In S704, the API service program calls the signaling service program to close the signaling room.

In S705, the signaling service program returns a success response to the API service program.

In S706, the API service program updates the chat room entity state in the database and the cache to be that the signaling room is already closed.

In S707, the database and the cache return a success response to the API service program.

In S708, the API service program returns the success response to the live streamer client.

The API service program closes the signaling room, the state of the voice chat room entity is updated to be that the signaling room has been closed and saving is made, so that the long connection server sends, to the live streamer client, the guest client and the audience client, a message which means that the chat room has been closed after the chat room is closed. The live streamer client stops pushing, to the CDN server and the signaling room, the audio stream of the live streaming room bound to the voice chat room entity after the chat room is closed so as to make the audience client stop pulling, from the CDN server, the audio stream of the live streaming room bound to the voice chat room entity after the chat room is closed and make the guest client stop pulling, from the signaling room, the audio stream of the live streaming room bound to the voice chat room entity after the chat room is closed.

In S709, the long connection service program pulls the data from the database and the cache in real time.

In some embodiments, the data may be obtained directly from the cache.

In S710, the long connection service program sends, to the audience client, the message which means that the chat room has been closed.

In S711, the long connection service program sends, to the live streamer client, the message which means that the chat room has been closed.

In S712, the long connection service program sends, to the guest client, the message which means that the chat room has been closed.

Likewise, the long connection service program pulls the data from the cache in real time, whether the video screen has been opened is judged through a difference of comparing the data pulling this time with the data pulling last time, and if the video screen has been opened, the message which means that the video screen has been opened is sent to the audience client, the live streamer client and the guest client respectively.

Besides, in a possible implementation, a timing program is further preset in the primary server so as to detect whether the live streaming room bound to the voice chat room is closed in a timing mode, and if the live streaming room bound to the voice chat room is closed, the voice chat room should be also closed. At the moment, the preset timing program calls a signaling service to close the signaling room, and the state of the voice chat room entity is updated to be that the signaling room has been closed and saving is made so as to make the long connection server send, to the live streamer client, the guest client and the audience client, the message which means that the chat room has been closed after the live streaming room is closed, then make the live streamer client stop pushing, to the CDN server and the signaling room, the audio stream and/or the video stream of the live streaming room bound to the voice chat room entity after the live streaming room is closed, then make the audience client stop pulling, from the CDN server, the audio stream and/or the video stream of the live streaming room bound to the voice chat room entity after the chat room is closed, and then make the guest client stop pulling, from the signaling room, the audio stream and/or the video stream of the live streaming room bound to the voice chat room entity after the chat room is closed.

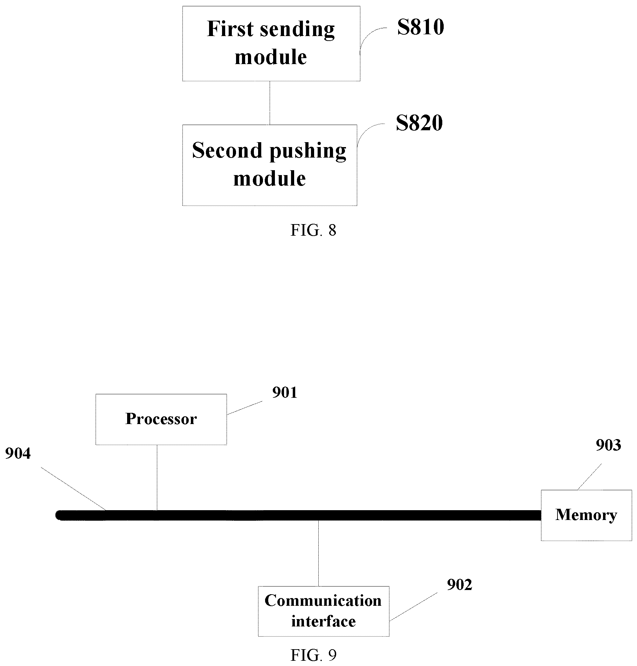

FIG. 8 is a block diagram of an apparatus for opening a video screen in a voice chat room according to an exemplary embodiment. Referring to FIG. 8, the apparatus includes a first sending module 810 and a first pushing module 820.

The first sending module 810 is configured to execute sending a request for opening voice chat room to a primary server so as to make the primary server set up a voice chat room, and then open the voice chat room after generating the data of the voice chat room, the request for opening voice chat room includes: a parameter value of a video screen state parameter, and the data of the voice chat room includes: the parameter value of the video screen state parameter obtained from the request for opening voice chat room.

The first pushing module 820 is configured to execute pushing a video stream and an audio stream to a content delivery network server in response to the parameter value of the video screen state parameter representing opening on the basis of the data of the voice chat room so as to make an audience client pull the video stream and the audio steam from the content delivery network server for outputting in response to the parameter value of the video screen state parameter representing opening on the basis of the data of the voice chat room.

The technical solution provided by the embodiments of the application at least bring about the following beneficial effects: as the request for opening voice chat room sent by a live streamer client contains the parameter value of the video screen state parameter, the primary server can determine whether the video screen is opened in the voice chat room according to the parameter value of the parameter after setting up and opening the voice chat room, the live streamer client pushes the video stream and the audio stream together when the video screen is opened so that a streamer in the chat room can not only make a voice chat, but also interact with the audiences in a video manner.

In some embodiments, the chat room opening request further includes: an identity of the live streaming room.

The first sending module 810 may include: a request sending unit, configured to execute sending the request for opening voice chat room to the primary server so as to make the primary server set up the voice chat room bound to the identity of the live streaming room according to the received request for opening voice chat room and then generate the data of the voice chat room and make the primary server obtain an identity of the live streamer client and an identity of the audience client from already saved data of the live streaming room according to the identity of the live streaming room, generate a message which means that the chat room has been opened, and send the message to the live streamer client and the audience client, where the voice chat room data contain: the parameter value of the video screen state parameter.

In some embodiments, the first pushing module 820 is configured to execute obtaining the data of the voice chat room after receiving the message which means that the chat room has been opened, pushing, to the content delivery network server, the video stream and the audio stream of the live streaming room bound to the voice chat room in response to the parameter value of the video screen state parameter representing opening, and pushing, to the content delivery network server, only the audio stream of the live streaming room bound to the voice chat room in response to the parameter value of the video screen state parameter representing closing so as to make the audience client obtain the voice chat room data after receiving the message which means that the chat room has been opened, pull, from the content delivery network server, the video stream and the audio stream of the live streaming room bound to the voice chat room for outputting in response to the parameter value of the video screen state parameter representing opening, and pull, from the content delivery network server, the audio stream of the live streaming room bound to the voice chat room for outputting in response to the parameter value of the video screen state parameter representing closing.

In some embodiments, the request sending unit is configured to execute sending the request for opening the chat room to the primary server so as to make the primary server set up the voice chat room entity according to the received request for opening the chat room, bind an identity of the obtained voice chat room entity to the identity of the live streaming room, then call a signaling service program, set up a signaling room, and save the parameter value of the video screen state parameter, voice chat room entity data, signaling room data and a binding relation between the identity of the voice chat room entity and the identity of the live streaming room as the data of the voice chat room correspondingly.

In some embodiments, if the already saved data of the live streaming room in the primary server contains an identity of the guest client, the apparatus further includes:
a second sending module, configured to execute sending the request for opening the chat room to the primary server so as to make the primary server send, to the guest client, the generated message which means that the chat room has been opened;
a second pushing module, configured to execute pushing, to the signaling room, the video stream and the audio stream of the live streaming room bound to the voice chat room in response to the parameter value of the video screen state parameter representing opening after obtaining the data of the voice chat room, and pushing, to the signaling room, only the audio stream of the live streaming room bound to the voice chat room in response to the parameter value of the video screen state parameter representing closing so as to make the guest client obtain the data of voice chat room after receiving the message which means that the chat room has been opened, pull, from the signaling room, the video stream and the audio stream of the live streaming room bound to the voice chat room for outputting in response to the parameter value of the video screen state parameter representing opening, and pull, from the signaling room, the audio stream of the live streaming room bound to the voice chat room for outputting in response to the parameter value of the video screen state parameter representing closing.

In some embodiments, the apparatus further includes:
a video screen closing detection module, configured to execute detecting whether a user clicks a button for closing the video screen after sending the request for opening the chat room to the primary server;
a third sending module, configured to execute sending, if yes, the request for opening the chat room to the primary server so as to make the primary server update the video screen state parameter in the saved data of the voice chat room to be closed, and send a generated video screen state parameter updating instruction to the live streamer client, the audience client and the guest client; and
a third pushing module, configured to execute obtaining the data of the voice chat room after receiving the video screen state parameter updating instruction, pushing, to the content delivery network server and the signaling room, only the audio stream of the live streaming room bound to the voice chat room entity so as to make the audience client obtain the data of the voice chat room after receiving the video screen state parameter updating instruction and pull, from the content delivery network server, the audio stream of the live streaming room bound to the voice chat room entity for outputting, and make the guest client obtain the data of the voice chat room after receiving the video screen state parameter updating instruction and pull, from the signaling room, the audio stream of the live streaming room bound to the voice chat room entity for outputting.

In some embodiments, the apparatus further includes:
a video screen opening detection module, configured to execute detecting whether the user clicks a button for opening the video screen after the first sending module sends the request for opening the chat room to the primary server;
a fourth sending module, configured to execute sending a request for opening the video screen to the primary server if it is detected that the user clicks the button for opening the video screen so as to make the primary server update the video screen state parameter in the saved data of the voice chat room to be opened, generate a video screen state parameter updating instruction and send the instruction to the live streamer client, the audience client and the guest client; and
a fourth pushing module, configured to execute obtaining the data of the voice chat room after receiving the video screen state parameter updating instruction, pushing, to the content delivery network server and the signaling room, the video stream and the audio stream of the live streaming room bound to the voice chat room entity so as to make the audience client obtain the data of the voice chat room after receiving the video screen state parameter updating instruction, pull, from the content delivery network server, the video stream and the audio stream of the live streaming room bound to the voice chat room entity for outputting, make the guest client obtain the data of the voice chat room after receiving the video screen state parameter updating instruction, and pull, from the signaling room, the video stream and the audio stream of the live streaming room bound to the voice chat room entity for outputting.

In some embodiments, the apparatus further includes:
a voice chat room closing detection module, configured to execute detecting whether the user clicks a button for closing the voice chat room;
a fifth sending module, configured to execute sending the request for closing the chat room to the primary server if it is detected that the user clicks the button for closing the voice chat room so as to make the primary server update the voice chat room entity to be in a closed state and unbind the identity of the voice chat room entity from the identity of the live streaming room and make the primary server update the state of the voice chat room entity to be that the signaling room has been closed and saving is made after the signaling room is closed and send, to the live streamer client, the guest client and the audience client, a message which means that the chat room has been closed; and
a pushing stop module, configured to execute stopping pushing, to the content delivery network server and the signaling room, the audio stream of the live streaming room bound to the voice chat room entity so as to make the audience client stop pulling, from the content delivery network server, the audio stream of the live streaming room bound to the voice chat room entity after the chat room is closed and make the guest client stop pulling, from the signaling room, the audio stream of the live streaming room bound to the voice chat room entity after the chat room is closed.

The application further provides an electronic device, as shown in FIG. 9, including a processor 901, a communication interface 902, a memory 903 and a communication bus 904. The processor 901, the communication interface 902 and the memory 903 complete communication with each other through the communication bus 904.

The memory 903 is configured to store a computer program.

The processor 901 is configured to realize, when executing the program stored in the memory 903, the following steps:
a request for opening the voice chat room is sent to a primary server so as to make the primary server set up a voice chat room, and open the voice chat room after generating a data of the voice chat room, wherein the request for opening the voice chat room contains: a parameter value of a video screen state parameter, and the data of the voice chat room contain: the parameter value of the video screen state parameter obtained from the request for opening the voice chat room; and
the video stream and the audio stream are pushed to the content delivery network server in response to the parameter value of the video screen state parameter representing opening on the basis of the data of the voice chat room so as to make the audience client pull, from the content delivery network server, the video stream and the audio stream for outputting in response to the parameter value of the video screen state parameter representing opening on the basis of the data of the voice chat room.

The communication bus mentioned in the above electronic device may be a peripheral component interconnect (PCI) bus or an extended industry standard architecture (EISA) bus, etc. The communication bus may be divided into an address bus, a data bus, a control bus, etc. For convenient denotation, only one thick line is used for denoting the communication bus in the Figure but does not mean that there is only one bus or one type of bus.

The communication interface is configured to realize communication between the server and other devices.

The memory may include a random access memory (RAM) and may also include a nonvolatile memory (NVM), for example, at least one disk memory. Optionally, the memory may be also at least one storage apparatus far away from the processor.

The processor may be a general-purpose processor (including a central processing unit (CPU), a network processor (NP, etc.), or a digital signal processor (DSP), an application specific integrated circuit (ASIC), a filed-programmable gate array (FPGA) or other programmable logic devices, a discrete gate or a transistor logic device, a discrete hardware component.

In another embodiment provided by the application, a computer readable storage medium is further included and stores a computer program. When the computer program is executed by a processor, steps of any method for opening the video screen in the chat room are realized.

In another embodiment provided by the application, a computer program product containing an instruction is further provided. When the computer program product runs on a computer, the computer executes any method of opening the video screen in the chat room in the above embodiment.

The above embodiments may be realized all or partially by software or hardware or firmware or any combination of them. The above embodiments may be realized all or partially by a form of the computer program product when realized by using the software. The computer program product includes one or more computer instructions. When a computer program instruction is loaded and executed on the computer, all or part of flows or functions may be generated according to the embodiments of the application. The computer may be a general-purpose computer, a special-purpose computer, a computer network or other programmable apparatuses. The computer instruction may be stored in a computer readable storage medium or transmitted from one computer readable storage medium to another computer readable storage medium, for example, the computer instruction may be transmitted from a website, a computer, a server or a data center to another website, another computer, another server or another data center in a wired manner (for example, a coaxial cable, an optical fiber, a digital user line (DSL)) or a wireless manner (for example, infrared, wireless, microwave, etc.). The computer readable storage medium may be an available medium which the computer can access or a data storage device of a server, a data center, etc. integrated with one or more available media. The available medium may be a magnetic medium (for example, a floppy disc, a hard disk and a magnetic tape), an optical medium (for example, DVD), or a semiconductor medium (for example, a solid state disk (SSD)), etc.

Those skilled in the art will easily figure out other implementation solutions of the application after considering the specification and practicing the disclosure disclosed herein. The application intends to cover any transformation, application or adaptive change of the application, which conform to a general principle of the application and include well-known knowledge or conventional technical means in the technical field not disclosed by the application. The specification and embodiments are constructed as only exemplary, and the true scope and spirit of the application are indicated by the claims.

It should be understood that the application is not limited to a precise structure described above and illustrated in the drawings and can allow various modifications and changes without departing from its scope. The scope of the application is limited only by the appended claims.

## Claims

1. A method for opening a video screen in a voice chat room, applied to a live streamer client and comprising:
sending a request for opening the voice chat room to a primary sever so that the primary server creates the voice chat room, generates data of the voice chat room, and opens the voice chat room, wherein the request comprises a parameter value representing a state of the video screen, and the data of the voice chat room comprises the parameter value obtained from the request; and
pushing, based on the data of the voice chat room, a video stream and an audio stream to a content delivery network server in response to the parameter value representing an open state of the video screen, so that an audience client pulls, based on the data of the voice chat room, the video stream and the audio stream from the content delivery network server for outputting in response to the parameter value representing the open state.

2. The method according to claim 1, wherein the request further comprises an identity of a live streaming room;
said sending the request to the primary server so that the primary server creates the voice chat room, generates the data of the voice chat room, and opens the voice chat room, comprises:
sending the request to the primary server so that the primary server creates the voice chat room bound to the identity in response to the received request, generates the data of the voice chat room, obtains identities of the live streamer client and the audience client from saved data of the live streaming room based on the identity, generates a message that the voice chat room has been opened, and sends the message to the live streamer client and the audience client.

3. The method according to claim 2, wherein said pushing, based on the data of the voice chat room, the video stream and the audio stream to the content delivery network server when the parameter value represents the open state, so that the audience client pulls, based on the data of the voice chat room, the video stream and the audio steam from the content delivery network server for outputting when the parameter value represents the open state, comprises:
obtaining the data of the voice chat room after receiving the message;
pushing, to the content delivery network server, the video stream and the audio stream of the live streaming room bound to the voice chat room in response to the parameter value representing the open state, so that the audience client pulls, from the content delivery network server, the video stream and the audio stream of the live streaming room for outputting; and
pushing, to the content delivery network server, only the audio stream of the live streaming room bound to the voice chat room in response to the parameter value representing a close state of the video screen, so that the audience client pulls, from the content delivery network server, the audio stream of the live streaming room for outputting.

4. The method according to claim 2, wherein said sending the request to the primary server so that the primary server creates the voice chat room bound to the identity in response to the received request, and generates the data of the voice chat room, comprises:
sending the request to the primary server so that the primary server creates a voice chat room entity in response to the received request, binds an identity of the voice chat room entity to the identity of the live streaming room, calls a signaling service program, creates a signaling room, and save the parameter value, data of the voice chat room entity, data of the signaling room and a binding relation between the identity of the voice chat room entity and the identity of the live streaming room as the data of the voice chat room.

5. The method according to claim 4, wherein the saved data of the live streaming room in the primary server comprises an identity of a guest client, the method further comprises:
sending the request to the primary server so that the primary server sends, to the guest client, the message that the voice chat room has been opened;
obtaining the data of the voice chat room;
pushing, to the signaling room, the video stream and the audio stream of the live streaming room bound to the voice chat room in response to the parameter value representing the open state, so that the guest client pulls, from the signaling room, the video stream and the audio stream of the live streaming room bound to the voice chat room for outputting; and
pushing, to the signaling room, the audio stream of the live streaming room bound to the voice chat room in response to the parameter value representing a close state of the video screen, so that the guest client pulls, from the signaling room, the audio stream of the live streaming room bound to the voice chat room for outputting.

6. The method according to claim 5, the method further comprises:
in response to a user clicking a button for closing the video screen, sending a request for closing the video screen to the primary server, so that the primary server updates the parameter value in the saved data of the voice chat room to represent the close state, and generates and sends an instruction for updating the parameter value to the live streamer client, the audience client and the guest client; and
obtaining the data of the voice chat room after receiving the instruction; and
pushing, to the content delivery network server and the signaling room, only the audio stream of the live streaming room bound to the voice chat room entity, so that the audience client obtains the data of the voice chat room after receiving the instruction and pulls, from the content delivery network server, the audio stream of the live streaming room bound to the voice chat room entity for outputting, and the guest client obtains the data of the voice chat room after receiving the instruction and pulls, from the signaling room, the audio stream of the live streaming room bound to the voice chat room entity for outputting.

7. The method according to claim 5, the method further comprises:
in response to a user clicking a button for opening the video screen, sending a request for opening the video screen to the primary server so that the primary server updates the parameter value in the saved data of the voice chat room to represent the open state, generates and sends an instruction for updating the parameter value to the live streamer client, the audience client and the guest client; and
obtaining the data of the voice chat room after receiving the instruction; and
pushing, to the content delivery network server and the signaling room, the video stream and the audio stream of the live streaming room bound to the voice chat room entity, so that the audience client obtains the data of the voice chat room after receiving an instruction for updating the parameter value representing the state of the video screen, pulls, from the content delivery network server, the video stream and the audio stream of the live streaming room bound to the voice chat room entity for outputting, and the guest client obtains the data of the voice chat room after receiving the instruction for updating the parameter value representing the state of the video screen, and pulls, from the signaling room, the video stream and the audio stream of the live streaming room bound to the voice chat room entity for outputting.

8. The method according to claim 3, further comprising:
in response to a user clicking a button for closing the voice chat room, sending a request for closing the voice chat room to the primary server, so that the primary server updates the parameter value in the saved data of the voice chat room to represent the close state, and unbinds an identity of the voice chat room entity from the live streaming room identity, and the primary server updates the state of the voice chat room entity to be that the signaling room has been closed and saving is made after a signaling room is closed, and sends, to the live streamer client, the guest client and the audience client, a message that the chat room has been closed; and
stopping pushing, to the content delivery network server and the signaling room, the audio stream of the live streaming room bound to the voice chat room entity, so that the audience client stop pulling, from the content delivery network server, the audio stream of the live streaming room bound to the voice chat room entity after the chat room is closed, and the guest client stop pulling, from the signaling room, the audio stream of the live streaming room bound to the voice chat room entity after the chat room is closed.

9. An apparatus for opening a video screen in a voice chat room, applied to a live streamer client and comprising:
a first sending module, configured to execute sending a request for opening the voice chat room to a primary sever so that the primary server creates the voice chat room, generates data of the voice chat room, and opens the voice chat room, wherein the request comprises a parameter value representing a state of the video screen, and the data of the voice chat room comprises the parameter value obtained from the request; and
a first pushing module, configured to execute pushing, based on the data of the voice chat room, a video stream and an audio stream to a content delivery network server in response to the parameter value representing an open state of the video screen, so that an audience client pulls, based on the data of the voice chat room, the video stream and the audio stream from the content delivery network server for outputting in response to the parameter value representing the open state.

10. The apparatus according to claim 9, wherein the request further comprises an identity of a live streaming room;
the first sending module, comprises:
a request sending unit, configured to execute sending the request to the primary server so that the primary server creates the voice chat room bound to the identity in response to the received request, generates the data of the voice chat room, obtains identities of the live streamer client and the audience client from saved data of the live streaming room based on the identity, generates a message that the voice chat room has been opened, and sends the message to the live streamer client and the audience client.

11. The apparatus according to claim 10, wherein the first pushing module is configured to execute:
obtaining the data of the voice chat room after receiving the message;
pushing, to the content delivery network server, the video stream and the audio stream of the live streaming room bound to the voice chat room in response to the parameter value representing the open state, so that the audience client pulls, from the content delivery network server, the video stream and the audio stream of the live streaming room for outputting; and
pushing, to the content delivery network server, only the audio stream of the live streaming room bound to the voice chat room in response to the parameter value representing a close state of the video screen, so that the audience client pulls, from the content delivery network server, the audio stream of the live streaming room for outputting.

12. The apparatus according to claim 10, wherein the request sending unit is configured to execute sending the request to the primary server so that the primary server creates a voice chat room entity in response to the received request, binds an identity of the voice chat room entity to the identity of the live streaming room, calls a signaling service program, creates a signaling room, and save the parameter value, data of the voice chat room entity, data of the signaling room and a binding relation between the identity of the voice chat room entity and the identity of the live streaming room as the data of the voice chat room.

13. The apparatus according to claim 12, wherein the saved data of the live streaming room in the primary server comprises an identity of a guest client, the apparatus further comprising:
a second sending module, configured to execute sending the request to the primary server so that the primary server sends, to the guest client, the message that the voice chat room has been opened; and
a second pushing module, configured to execute pushing, to the signaling room, the video stream and the audio stream of the live streaming room bound to the voice chat room in response to the parameter value representing the open state, so that the guest client pulls, from the signaling room, the video stream and the audio stream of the live streaming room bound to the voice chat room for outputting; and pushing, to the signaling room, the audio stream of the live streaming room bound to the voice chat room in response to the parameter value representing a close state of the video screen, so that the guest client pulls, from the signaling room, the audio stream of the live streaming room bound to the voice chat room for outputting.

14. The apparatus according to claim 13, further comprising:
a video screen closing detection module, configured to execute detecting whether a user clicks a button for closing the video picture after sending the request to the primary server;
a third sending module, configured to execute: in response to the user clicking the button for closing the video screen, sending a request for closing the video screen to the primary server, so that the primary server updates the parameter value in the saved data of the voice chat room to represent the close state, and generates and sends an instruction for updating the parameter value to the live streamer client, the audience client and the guest client; and
a third pushing module, configured to execute obtaining the data of the voice chat room after receiving the instruction; and pushing, to the content delivery network server and the signaling room, only the audio stream of the live streaming room bound to the voice chat room entity, so that the audience client obtains the data of the voice chat room after receiving the instruction and pulls, from the content delivery network server, the audio stream of the live streaming room bound to the voice chat room entity for outputting, and the guest client obtains the data of the voice chat room after receiving the instruction and pulls, from the signaling room, the audio stream of the live streaming room bound to the voice chat room entity for outputting.

15. The apparatus according to claim 13, further comprising:
a video screen opening detection module, configured to execute detecting whether a user clicks a button for opening the video screen after sending the request to the primary server;
a fourth sending module, configured to execute: in response to the user clicking the button for opening the video screen, sending a request for opening the video screen to the primary server so that the primary server updates the parameter value in the saved data of the voice chat room to represent the open state, generates and sends an instruction for updating the parameter value to the live streamer client, the audience client and the guest client; and
a fourth pushing module, configured to execute obtaining the data of the voice chat room after receiving the instruction; and pushing, to the content delivery network server and the signaling room, the video stream and the audio stream of the live streaming room bound to the voice chat room entity, so that the audience client obtains the data of the voice chat room after receiving an instruction for updating the parameter value representing the state of the video screen, pulls, from the content delivery network server, the video stream and the audio stream of the live streaming room bound to the voice chat room entity for outputting, and the guest client obtains the data of the voice chat room after receiving the instruction for updating the parameter value representing the state of the video screen, and pulls, from the signaling room, the video stream and the audio stream of the live streaming room bound to the voice chat room entity for outputting.

16. The apparatus according to claim 11, further comprising:
a voice chat room closing detection module, configured to execute detecting whether a user clicks a button for closing the voice chat room
a fifth sending module, configured to execute: in response to the user clicking the button for closing the voice chat room, sending a request for closing the voice chat room to the primary server, so that the primary server updates the parameter value in the saved data of the voice chat room to represent the close state, and unbinds an identity of the voice chat room entity from the live streaming room identity, and the primary server updates the state of the voice chat room entity to be that the signaling room has been closed and saving is made after a signaling room is closed, and sends, to the live streamer client, the guest client and the audience client, a message that the chat room has been closed; and
a pushing stop module, configured to execute stopping pushing, to the content delivery network server and the signaling room, the audio stream of the live streaming room bound to the voice chat room entity, so that the audience client stop pulling, from the content delivery network server, the audio stream of the live streaming room bound to the voice chat room entity after the chat room is closed, and the guest client stop pulling, from the signaling room, the audio stream of the live streaming room bound to the voice chat room entity after the chat room is closed.

17. An electronic device, comprising:
a processor; and
a memory, configured to store an instruction executable by the processor; wherein
the processor is configured to execute:
sending a request for opening the voice chat room to a primary sever so that the primary server creates the voice chat room, generates data of the voice chat room, and opens the voice chat room, wherein the request comprises a parameter value representing a state of the video screen, and the data of the voice chat room comprises the parameter value obtained from the request; and
pushing, based on the data of the voice chat room, a video stream and an audio stream to a content delivery network server in response to the parameter value representing an open state of the video screen, so that an audience client pulls, based on the data of the voice chat room, the video stream and the audio stream from the content delivery network server for outputting in response to the parameter value representing the open state.

18. The electronic device according to claim 17, wherein when the request further comprises an identity of a live streaming room, the processor is configured to execute:
sending the request to the primary server so that the primary server creates the voice chat room bound to the identity in response to the received request, generates the data of the voice chat room, obtains identities of the live streamer client and the audience client from saved data of the live streaming room based on the identity, generates a message that the voice chat room has been opened, and sends the message to the live streamer client and the audience client.

19. The electronic device according to claim 18, wherein the processor is configured to execute:
obtaining the data after receiving the message;
pushing, to the content delivery network server, the video stream and the audio stream of the live streaming room bound to the voice chat room in response to the parameter value representing the open state, so that the audience client pulls, from the content delivery network server, the video stream and the audio stream of the live streaming room for outputting; and
pushing, to the content delivery network server, only the audio stream of the live streaming room bound to the voice chat room in response to the parameter value representing a close state of the video screen, so that the audience client pulls, from the content delivery network server, the audio stream of the live streaming room for outputting.

20. The electronic device according to claim 18, wherein the processor is configured to execute:
sending the request to the primary server so that the primary server creates a voice chat room entity in response to the received request, binds an identity of the voice chat room entity to the identity of the live streaming room, calls a signaling service program, creates a signaling room, and save the parameter value, data of the voice chat room entity, data of the signaling room and a binding relation between the identity of the voice chat room entity and the identity of the live streaming room as the data of the voice chat room.

21. The electronic device according to claim 20, wherein when the saved data of the live streaming room in the primary server comprises an identity of a guest client, the processor is further configured to execute:
sending the request to the primary server so that the primary server sends, to the guest client, the message that the voice chat room has been opened;
obtaining the data of the voice chat room;
pushing, to the signaling room, the video stream and the audio stream of the live streaming room bound to the voice chat room in response to the parameter value representing the open state, so that the guest client pulls, from the signaling room, the video stream and the audio stream of the live streaming room bound to the voice chat room for outputting; and
pushing, to the signaling room, the audio stream of the live streaming room bound to the voice chat room in response to the parameter value representing a close state of the video screen, so that the guest client pulls, from the signaling room, the audio stream of the live streaming room bound to the voice chat room for outputting.

22. The electronic device according to claim 21, wherein the processor is further configured to execute:
in response to a user clicking a button for closing the video screen, sending a request for closing the video screen to the primary server, so that the primary server updates the parameter value in the saved data of the voice chat room to represent the close state, and generates and sends an instruction for updating the parameter value to the live streamer client, the audience client and the guest client; and
obtaining the data of the voice chat room after receiving the instruction; and
pushing, to the content delivery network server and the signaling room, only the audio stream of the live streaming room bound to the voice chat room entity, so that the audience client obtains the data of the voice chat room after receiving the instruction and pulls, from the content delivery network server, the audio stream of the live streaming room bound to the voice chat room entity for outputting, and the guest client obtains the data of the voice chat room after receiving the instruction and pulls, from the signaling room, the audio stream of the live streaming room bound to the voice chat room entity for outputting.

23. The electronic device according to claim 21, wherein the processor is further configured to execute:
in response to a user clicking a button for opening the video screen, sending a request for opening the video screen to the primary server so that the primary server updates the parameter value in the saved data of the voice chat room to represent the open state, generates and sends an instruction for updating the parameter value to the live streamer client, the audience client and the guest client; and
obtaining the data of the voice chat room after receiving the instruction; and
pushing, to the content delivery network server and the signaling room, the video stream and the audio stream of the live streaming room bound to the voice chat room entity, so that the audience client obtains the data of the voice chat room after receiving an instruction for updating the parameter value representing the state of the video screen, pulls, from the content delivery network server, the video stream and the audio stream of the live streaming room bound to the voice chat room entity for outputting, and the guest client obtains the data of the voice chat room after receiving the instruction for updating the parameter value representing the state of the video screen, and pulls, from the signaling room, the video stream and the audio stream of the live streaming room bound to the voice chat room entity for outputting.

24. The electronic device according to claim 19, wherein the processor is further configured to execute:
in response to a user clicking a button for closing the voice chat room, sending a request for closing the voice chat room to the primary server, so that the primary server updates the parameter value in the saved data of the voice chat room to represent the close state, and unbinds an identity of the voice chat room entity from the live streaming room identity, and the primary server updates the state of the voice chat room entity to be that the signaling room has been closed and saving is made after a signaling room is closed, and sends, to the live streamer client, the guest client and the audience client, a message that the chat room has been closed; and
stopping pushing, to the content delivery network server and the signaling room, the audio stream of the live streaming room bound to the voice chat room entity, so that the audience client stop pulling, from the content delivery network server, the audio stream of the live streaming room bound to the voice chat room entity after the chat room is closed, and the guest client stop pulling, from the signaling room, the audio stream of the live streaming room bound to the voice chat room entity after the chat room is closed.

25. A storage medium storing a computer program thereon, wherein the program, when executed by a processor, implements the method of any one of claims 1 to 8.
